# DEMANDE DE BREVET EUROPEEN

(11) **EP 0 920 195 A1**
(43) Date de publication de la demande: **02.06.1999**
(21) Numéro de dépôt: 98203909.1
(22) Date de dépôt: 18.11.1998
(51) Int. Cl.: H04N 5/18, H04N 5/20

(54) **Dispositif d'acquisition et d'amplification de signaux électroniques**

(30) Priorité: 28.11.1997 FR 9715030
(71) Demandeur: Koninklijke Philips Electronics N.V., 5621 BA Eindhoven (NL)
(72) Inventeur: Darthenay, Frédéric, 75008 Paris (FR); Jacquet, Sébastien, 75008 Paris (FR); Morisson, Richard, 75008 Paris (FR)
(74) Mandataire: Caron, Jean

(57) **Abrégé**

La présente invention concerne un dispositif (AAM) d'acquisition et d'amplification de signaux électroniques, comprenant :
. un module d'acquisition (T/H) recevant un signal d'entrée (ES) à mémoriser,
. un amplificateur (A1) pour amplifier le signal mémorisé, et ayant un gain variant en fonction d'un signal de contrôle de gain (GC).

Selon l'invention, deux boucles de régulation distinctes (A2, CMP1, OM1) et (CMP2, OM2) permettent de compenser des composantes continues parasites introduites par le module d'acquisition (T/H), d'une part, et par l'amplificateur (A1), d'autre part.

Applications : acquisition et amplification de signaux dans une caméra CCD.

## Description

La présente invention concerne un dispositif d'acquisition et d'amplification de signaux électroniques, comprenant :
. un module d'acquisition destiné à recevoir un signal d'entrée du'dispositif et à le mémoriser à un instant donné,
. un amplificateur, destiné à amplifier le signal mémorisé par le module d'acquisition, et ayant un gain variant en fonction d'un signal dit de contrôle de gain.

Dans un tel dispositif, le module d'acquisition et l'amplificateur sont susceptibles d'introduire dans leurs signaux de sortie des composantes continues parasites dues à leur procédé de fabrication. De plus, la composante continue parasite introduite par le module d'acquisition se voit elle-même amplifiée par l'amplificateur. La composante continue parasite qui résulte de ces phénomènes provoque un important décalage de la composante alternative du signal de sortie du dispositif. Or, dans la plupart des applications, c'est cette composante alternative qui contient l'information véhiculée par le signal, et destinée à être exploitée par des organes de traitement placés en aval du dispositif d'acquisition et d'amplification. Ces organes de traitement ont une admissibilité, c'est à dire une amplitude de variation maximale de leur signal d'entrée, bien déterminée. Lorsque l'amplitude de leur signal d'entrée dépasse cette valeur, leurs étages d'entrée risquent de saturer, c'est-à-dire d'écrêter le signal d'entrée, et donc de provoquer une perte d'informations qui peut être importante, ce qui n'est pas acceptable.

L'invention permet de remédier dans une large mesure à cet inconvénient en proposant un dispositif d'acquisition et d'amplification dans lequel les décalages provoqués par le module d'acquisition et par l'amplificateur sont compensés au moyen de boucles de régulation.

En effet, selon la présente invention, un dispositif d'acquisition et d'amplification conforme au paragraphe introductif est caractérisé en ce qu'il comporte en outre :
. un premier et un deuxième modules de décalage, chacun étant muni d'une entrée et d'une sortie de signal, entre lesquelles il est destiné à générer une différence de potentiel dont la valeur dépend de la valeur d'un signal de commande, les premier et deuxième modules de décalage étant respectivement disposés entre le module d'acquisition et l'amplificateur, d'une part, et à la suite de l'amplificateur, d'autre part, et
. un premier et un deuxième comparateurs, destinés à délivrer, lorsque le signal d'entrée du dispositif présente un niveau dit de référence, les signaux de commande des premier et deuxième modules de décalage, respectivement représentatifs d'une différence existant entre la valeur du signal de sortie du premier module de décalage et une première valeur prédéterminée, d'une part, et d'une différence entre la valeur du signal de sortie de l'amplificateur et une deuxième valeur prédéterminée, d'autre part.

Ce dispositif comporte donc une première boucle de régulation, qui assure que tout décalage introduit par le module d'acquisition est détecté par le premier comparateur et provoque un décalage de la valeur de la composante continue du signal de sortie du module d'acquisition qui compense l'introduction de la composante continue parasite opérée par ledit module. Le dispositif selon l'invention comporte de plus une deuxième boucle de régulation, qui assure que tout décalage introduit par l'amplificateur est détecté par le deuxième comparateur et provoque un décalage de la valeur de la composante continue du signal de sortie de l'amplificateur qui compense l'introduction de la composante continue parasite opérée par ledit amplificateur. Ainsi la somme de l'ensemble des décalages opérés au sein du dispositif est nulle, et les risques de saturation des étages d'entrée des organes de traitement sont grandement limités. En effet, la composante continue de leur signal d'entrée ayant été éliminée, ce signal ne consistera plus qu'en une composante alternative, laquelle pourra donc avoir pour amplitude maximale l'admissibilité des organes de traitement et véhiculer ainsi une quantité maximale d'informations.

Un autre avantage de l'invention réside dans le fait que les compensations des composantes continues parasites introduites par le module d'acquisition et l'amplificateur sont opérées séparément, par des boucles de régulation distinctes. Une compensation globale au moyen d'une boucle unique exploitant le signal de sortie de l'ampificateur et effectuant une compensation en amont de celui-ci pourrait mener à des oscillations. Il est en effet bien connu qu'une boucle de régulation comportant un élément à gain variable ne peut être stabilisée de manière optimale pour toutes ses configurations. Une bonne stabilité ne pourrait donc être obtenue qu'en introduisant au sein de la boucle de régulation un atténuateur variable destiné à compenser les variations du gain de l'amplificateur, mais un tel atténuateur est coûteux et sa mise en oeuvre est souvent délicate. Par ailleurs, la séparation des deux boucles de régulation permet d'attribuer à chacune une constante de temps adaptée à la fréquence des corrections qu'elle doit effectuer. La première boucle de régulation pourra ainsi avoir un temps de réaction relativement long, tandis que la deuxième boucle de régulation devra avoir un temps de réaction beaucoup plus court, permettant de corriger rapidement toute modification dans la valeur du décalage introduit par l'amplificateur qui serait due à un changement de la valeur de son gain.

Une variante de l'invention présente un dispositif d'acquisition et d'amplification tel que décrit ci-dessus, caractérisé en ce qu'il comporte :
. N branches d'acquisition comprenant chacune un module d'acquisition et un module de décalage, les N modules d'acquisition étant destinés à recevoir et à mémoriser alternativement le signal d'entrée du dispositif, et
. un multiplexeur muni d'une sortie et de N entrées, chacune reliée à la sortie du module de décalage de l'une des N branches d'acquisition, l'amplificateur étant destiné à amplifier le signal de sortie du multiplexeur, le premier comparateur étant destiné à délivrer à celui des modules de décalage dont la sortie est sélectionnée par le multiplexeur un signal de commande représentatif d'une différence existant entre la valeur du signal de sortie du multiplexeur et la première valeur prédéterminée lorsque le signal d'entrée du dispositif présente un niveau de référence.

Cette variante permet de multiplier par N la fréquence d'acquisition du signal d'entrée du dispositif, sans pour autant accroître la fréquence à laquelle chaque module d'acquisition doit mémoriser le signal d'entrée, et donc de s'affranchir dans une large mesure de limitations en fréquence que ceux-ci pourraient présenter. Le multiplexeur mis en oeuvre dans cette variante de l'invention est, lui aussi, susceptible d'introduire dans son signal de sortie une composante continue parasite, mais, ce décalage s'ajoutant à celui introduit par le module d'acquisition de la branche sélectionnée par le multiplexeur, il sera détecté par la première boucle de régulation et'corrigé, de manière préventive, en amont dudit multiplexeur par celui des modules de décalage dont la sortie est sélectionnée.

Une autre variante de l'invention présente un dispositif tel que décrit ci-dessus, caractérisé en ce qu'il comporte un deuxième amplificateur, dont le gain est fixe, et qui est inséré entre le multiplexeur et le premier comparateur et destiné à amplifier le signal de sortie du multiplexeur.

Ce deuxième amplificateur opère une amplification du signal de sortie du multiplexeur, et donc des composantes continues parasites. Il permet ainsi d'augmenter la sensibilité de la première boucle de régulation, dans laquelle il est inséré, sans pour autant qu'il ne soit nécessaire de recourir à un comparateur de plus grande sensibilité, ce qui permet d'améliorer les performances du dispositif sans augmenter de manière significative son coût de production.

Dans un mode de réalisation préféré de l'invention, la valeur du gain du deuxième amplificateur est égale à la valeur maximale que peut prendre le gain de l'amplificateur à gain variable.

Ce choix de la valeur du gain du deuxième amplificateur assure que tout décalage introduit en amont de l'amplificateur à gain variable qui peut être détecté à la sortie de celui-ci sera compensé par la première boucle de régulation. Un tel choix permet donc l'obtention d'un rapport performances/prix optimal.

Ainsi qu'exposé précédemment, un tel dispositif d'acquisition et d'amplification est particulièrement bien adapté au traitement de signaux vidéo. L'invention concerne donc également une caméra contenant :
. un dispositif de détection et de conversion de lumière en signaux électroniques analogiques,
. un dispositif d'acquisition et d'amplification desdits signaux conforme à la description qui précède,
. un convertisseur analogique/numérique destiné à convertir des signaux analogiques délivrés par le dispositif d'acquisition et d'amplification en signaux numériques, et
. une unité de traitement numérique destinée à recevoir et à exploiter les signaux délivrés par le convertisseur analogique/numérique, et à émettre vers le dispositif d'acquisition et d'amplification le signal de contrôle de gain.

L'invention sera mieux comprise à l'aide de la description suivante de quelques modes de réalisation, faite à titre d'exemple non-limitatif et en regard des dessins annexés, dans lesquels :
- la figure 1 est un schéma fonctionnel décrivant un dispositif d'acquisition et d'amplification selon l'invention,
- la figure 2a est un schéma fonctionnel décrivant un mode de réalisation d'un module de décalage présent dans un dispositif selon l'invention,
- la figure 2b est un schéma fonctionnel décrivant un autre mode de réalisation d'un module de décalage présent dans un dispositif selon l'invention,
- la figure 3 est un schéma fonctionnel décrivant un dispositif d'acquisition et d'amplification selon une variante de l'invention, et
- la figure 4 est un schéma fonctionnel décrivant une caméra intégrant un dispositif d'acquisition et d'amplification selon l'invention.

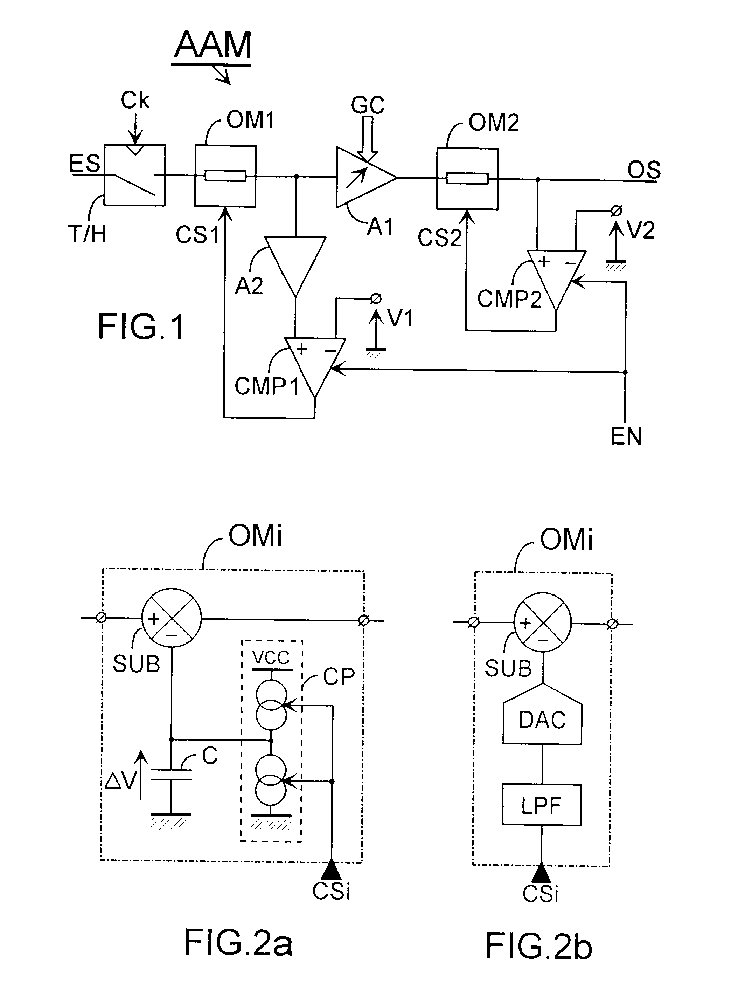

La figure 1 est un schéma fonctionnel partiel d'un dispositif d'acquisition et d'amplification AAM conforme à l'invention. Ce dispositif comprend :
. un module d'acquisition T/H, piloté par un signal d'horloge Ck, destiné à recevoir un signal d'entrée ES du dispositif et à le mémoriser à un instant donné, correspondant à un front actif du signal d'horloge Ck,
. un amplificateur A1, destiné à amplifier le signal mémorisé par le module d'acquisition T/H, et ayant un gain G variant en fonction d'un signal dit de contrôle de gain GC.

Ce dispositif comporte en outre un premier et un deuxième modules de décalage OM1 et OM2. Chacun de ces modules est muni d'une entrée et d'une sortie de signal, entre lesquelles il est destiné à générer une différence de potentiel dont la valeur dépend de la valeur d'un signal de commande CS1 ou CS2. Le premier module de décalage OM1 est disposé entre le module d'acquisition T/H et l'amplificateur A1, tandis que le deuxième module de décalage OM2 est disposé à la suite de l'amplificateur A1. Le dispositif d'aquisition et d'amplification AAM comporte de plus un premier et un deuxième comparateurs CMP1 et CMP2, destinés à délivrer les signaux de commande CS1 et CS2 des premier et deuxième modules de décalage OM1 et OM2. Le signal de commande CS1 est représentatif d'une différence existant entre la valeur du signal de sortie du module de décalage OM1 et une première valeur prédéterminée V1. Le signal de commande CS2 est représentatif d'une différence entre la valeur du signal de sortie de l'amplificateur A1 et une deuxième valeur prédéterminée V2. Chacun des premier et deuxième comparateurs CMP1 et CMP2 est muni d'une entrée d'autorisation recevant un signal d'autorisation EN, qui prend un état actif lorsque le signal d'entrée ES présente un niveau de référence. Divers modes d'élaboration du signal d'autorisation EN existent et sont connus de l'homme du métier.

Lorsque le signal d'entrée ES présente un niveau de référence, c'est-à-dire par exemple le niveau zéro dans un cas particulier où le signal d'entrée est un signal vidéo, un signal de sortie OS résultant de l'acquisition et de l'amplification du signal ES doit lui aussi présenter un niveau zéro. Si ce n'est pas le cas, la valeur du signal de sortie OS représente la somme des composantes continues parasites introduites par le module d'acquisition T/H, d'une part, et par l'amplificateur A1, d'autre part. Ces composantes continues parasites doivent être compensées, car la composante alternative que présente le signal d'entrée ES, en dehors des fenêtres temporelles correspondant aux niveaux de référence, sera amplifiée, puis décalée de la valeur prise par le signal de sortie OS lorsque le signal d'entrée présente un niveau de référence. Ce décalage risque de provoquer une saturation d'étages d'entrées d'organes de traitement dudit signal de sortie OS, résultant en un écrêtage et donc une perte d'information. La compensation de ce décalage est opérée sur la base des résultats des comparaisons effectuées par les premier et deuxième comparateurs CMP1 et CMP2 validées par le signal d'autorisation EN à un moment où les signaux d'entrée et de sortie de l'amplificateur A1 devraient présenter un niveau égal à zéro. Les première et deuxième valeurs prédéterminées V1 et V2 seront choisies égales à zéro si l'on souhaite détecter un décalage par rapport à un niveau de référence égal à zéro.

Dans une première boucle de régulation, tout décalage introduit par le module d'acquisition T/H est détecté par le premier comparateur CMP1 dont la sortie, validée par le signal d'autorisation EN, délivre un signal de commande CS1 qui impose au module de décalage OM1 d'opérer un décalage de la valeur de la composante continue du signal de sortie du module d'acquisition T/H, en vue de compenser le décalage introduit par ledit module d'acquisition T/H. Dans une deuxième boucle de régulation, tout décalage introduit par l'amplificateur A1 est détecté par le deuxième comparateur CMP2 dont la sortie, validée par le signal d'autorisation EN, délivre un signal de commande CS2 qui impose au module de décalage OM2 d'opérer un décalage de la valeur de la composante continue du signal de sortie de l'amplificateur A1, en vue de compenser le décalage introduit par ledit amplificateur A1. Ainsi la somme de l'ensemble des décalages opérés au sein du dispositif est nulle, et les risques de saturation des étages d'entrée des organes de traitement qui recevront le signal de sortie OS du dispositif sont grandement limités. En effet, la composante continue dudit signal OS ayant été éliminée, ce signal ne consistera plus qu'en une composante alternative, laquelle pourra donc avoir une amplitude maximale égale à l'admissibilité des organes de traitement et véhiculer ainsi une quantité maximale d'informations.

Le dispositif d'acquisition et d'amplification comporte, dans le mode particulier de réalisation décrit par la figure 1, un deuxième amplificateur A2, dont le gain est fixe, et qui est inséré entre le premier module de décalage OM1 et le premier comparateur CMP1. Ce deuxième amplificateur A2 opère une amplification de la composante continue parasite introduite par le module d'acquisition T/H. Il permet ainsi d'augmenter la sensibilité de la première boucle de régulation, dans laquelle il est inséré, sans pour autant qu'il ne soit nécessaire de recourir à un comparateur CMP1 de plus grande sensibilité, ce qui permet d'améliorer les performances du dispositif sans augmenter de manière significative son coût de production. La valeur du gain du deuxième amplificateur A2 sera avantageusement choisie égale à la valeur maximale que peut prendre le gain de l'amplificateur à gain variable A1. Ce choix assure que tout décalage introduit en amont de l'amplificateur à gain variable A1 qui peut être détecté à la sortie de celui-ci sera compensé par la première boucle de régulation. Un tel choix permet donc l'obtention d'un rapport performances/prix optimal.

Les figures 2a et 2b décrivent deux modes de réalisation possibles des modules de décalage OMi (i=1 ou 2). D'autres modes de réalisation existent et sont connus du spécialiste. Dans le mode de réalisation décrit par la figure 2a, le signal de commande CSi actionne une pompe de charge CP qui, selon la valeur du signal de commande CSi, injecte un courant dans une capacité C ou tire un courant depuis ladite capacité, provoquant ainsi soit une augmentation, soit une diminution d'une tension ΔV présente aux bornes de cette capacité. Cette tension ΔV est soustraite à la valeur de la tension d'entrée du module de décalage OMi par un soustracteur SUB. Le module de décalage OMi génère donc entre son entrée et sa sortie une différence de potentiel ΔV dont la valeur dépend de la valeur du signal de commande CSi. Ce mode de réalisation est avantageux car la capacité a un effet de lissage en tension, équivalent à un effet de moyenne, qui rend le module de décalage OMi relativement peu sensible à des variations intempestives de la valeur du signal de commande CSi, qui risqueraient de provoquer des oscillations dans la boucle de régulation dont le module de décalage OMi fait partie. Dans le mode de réalisation décrit par la figure 2b, le signal de commande CSi est filtré au moyen d'un filtre passe-bas LPF, qui peut par exemple consister en un compteur destiné à être incrémenté par des états actifs du signal CSi. La sortie numérique de ce filtre LPF est alors convertie en analogique au moyen d'un convertisseur numérique/analogique DAC, qui génère une tension ΔV, qui est soustraite à la valeur de la tension d'entrée du module de décalage OMi par un soustracteur SUB. Le module de décalage OMi génère donc entre son entrée et sa sortie une différence de potentiel ΔV dont la valeur dépend de la valeur du signal de commande CSi. Ce mode de réalisation est avantageux car le filtre passe-bas LPF a un effet de moyenne, qui rend le module de décalage OMi relativement peu sensible à des variations intempestives de la valeur du signal de commande CSi, qui risqueraient de provoquer des oscillations dans la boucle de régulation dont le module de décalage OMi fait partie. Il existe une grande quantitité de modes de réalisation pour le soustracteur SUB. Il peut par exemple être réalisé sur la base d'un amplificateur opérationnel. Ces modes de réalisation sont bien connus de l'homme du métier.

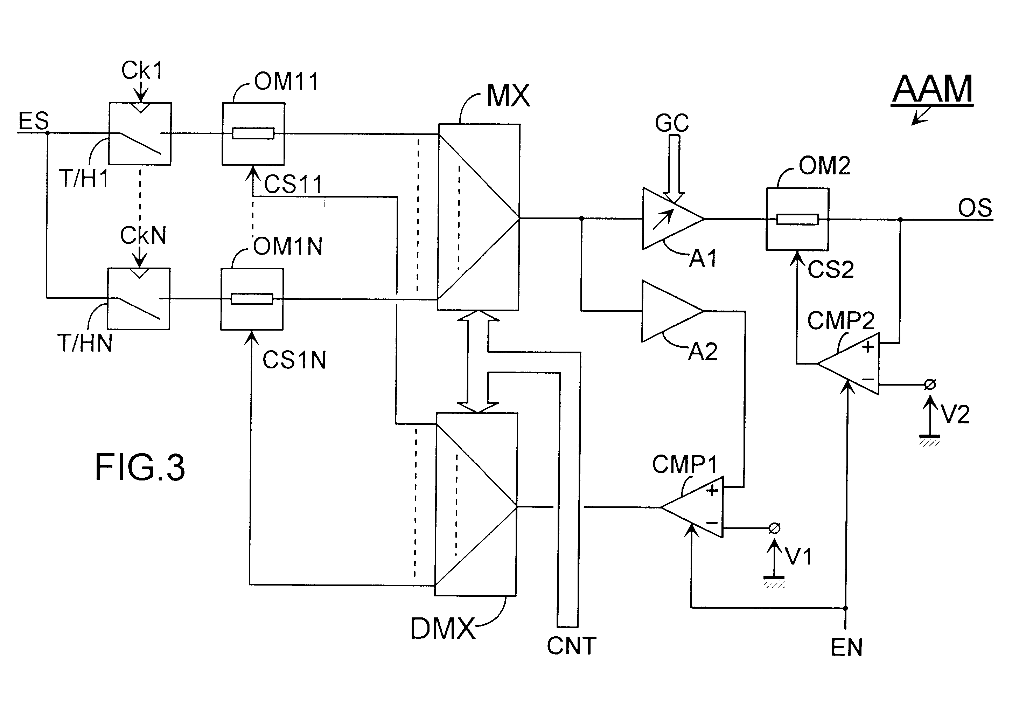

La figure 3 est un schéma fonctionnel partiel d'un dispositif d'acquisition et d'amplification AAM conforme à une variante de l'invention. Dans la mesure du possible, les éléments identiques à ceux décrits dans la figure 1 ont été affectés des mêmes signes de référence afin de faciliter la compréhension de l'exposé. En outre, leur fonctionnement étant identique, il ne sera pas à nouveau développé ici. Selon cette variante de l'invention, le dispositif d'acquisition et d'amplification AAM comprend :
. N branches d'acquisition comprenant chacune un module d'acquisition T/Hi piloté par un signal d'horloge Cki, et un module de décalage OMli (pouri=1 à N), les N modules d'acquisition étant destinés à recevoir et à mémoriser alternativement le signal d'entrée ES du dispositif AAM, et
. un multiplexeur MX muni d'une sortie et de N entrées, chacune reliée à la sortie du module de décalage OMi de l'une des N branches d'acquisition, l'amplificateur A1 étant destiné à amplifier le signal de sortie du multiplexeur MX, le premier comparateur CMP1 étant destiné à délivrer à celui des modules de décalage OMi dont la sortie est sélectionnée par le multiplexeur MX un signal de commande CSi représentatif d'une différence existant entre la valeur du signal de sortie du multiplexeur MX et la première valeur prédéterminée V1 lorsque le signal d'entrée ES du dispositif présente un niveau de référence.

Dans ce mode de réalisation, le multiplexeur N entrées MX est contrôlé par un mot de commande CNT codé sur P bits, avec N=2^{p}. Deux signaux d'horloges successifs Cki, Cki+1 présentent entre eux un déphasage égal à T/N, où T est une pseudo-période du signal d'entrée ES du dispositif AAM. Le signal de sortie du premier comparateur CMP1 est démultiplexé au moyen du démultiplexeur DMX, lequel est également contrôlé par le mot de commande CNT. Ceci permet d'assurer que le signal de commande CSi est bien envoyé au module de décalage OMi qui appartient à la branche d'acquisition qui a introduit dans le signal de sortie du multiplexeur MX le décalage détecté par le premier comparateur CMP1. Le décalage introduit par le multiplexeur MX lui-même est également pris en compte dans le résultat de la comparaison et compensé de manière préventive par le module de décalage OMi.

Cette variante permet de multiplier par N la fréquence d'acquisition du signal d'entrée ES du dispositif AAM, sans pour autant accroître la fréquence à laquelle chaque module d'acquisition T/Hi (pour i=1 à N) doit mémoriser le signal d'entrée.

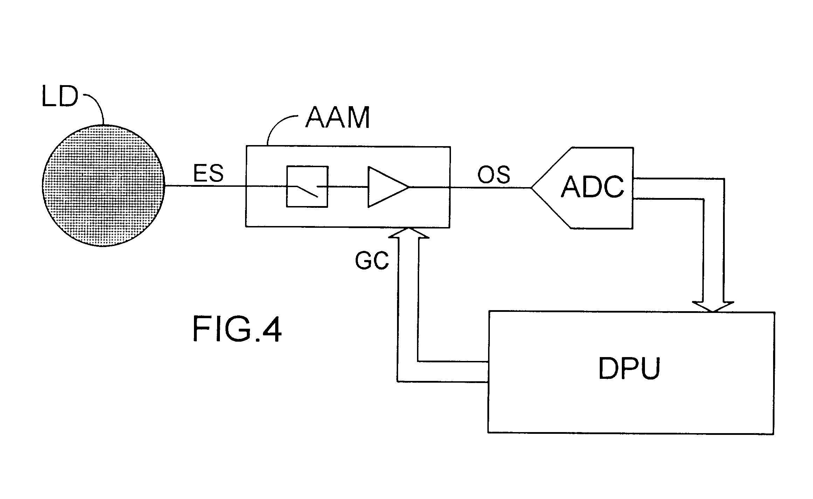

La figure 4 représente très schématiquement une caméra mettant en oeuvre un dispositif d'acquisition et d'amplification. Cette caméra contient :
. un dispositif LD de détection et de conversion de lumière en signaux électroniques analogiques ES,
. un dispositif d'acquisition et d'amplification AAM desdits signaux ES, conforme à la description précédente et présentant une entrée destinée à recevoir un signal de contrôle de gain GC,
. un convertisseur analogique/numérique ADC destiné à convertir des signaux analogiques OS délivrés par le dispositif d'acquisition et d'amplification AAM en signaux numériques, et
. une unité de traitement numérique DPU destinée à recevoir et à exploiter les signaux délivrés par le convertisseur analogique/numérique ADC, et à émettre vers le dispositif d'acquisition et d'amplification AAM le signal de contrôle de gain GC.

Le signal de contrôle de gain GC élaboré par l'unité de traitement numérique DPU est tel que l'amplitude de la composante alternative du signal de sortie OS correspond à l'amplitude maximale de variation du signal de sortie numérique du convertisseur analogique/numérique. Ce signal de contrôle de gain GC sera donc amené à varier, selon les applications, une fois par image ou une fois par ligne composant cette image. La séparation des deux boucles de régulation incluses dans le module d'acquisition et d'amplification AAM permet d'attribuer à chacune de ces boucles une constante de temps adaptée à la fréquence des corrections qu'elle doit effectuer. La première boucle de régulation pourra ainsi avoir un temps de réaction relativement long, tandis que la deuxième boucle de régulation devra avoir un temps de réaction beaucoup plus court, permettant de corriger rapidement toute modification dans la valeur du décalage introduit par l'amplificateur qui serait due à un changement de la valeur de son gain consécutif à une modification de la valeur du signal de contrôle de gain GC.

## Revendications

1. Dispositif d'acquisition et d'amplification de signaux électroniques, comprenant :
. un module d'acquisition destiné à recevoir un signal d'entrée du dispositif et à le mémoriser à un instant donné,
. un amplificateur, destiné à amplifier le signal mémorisé par le module d'acquisition, et ayant un gain variant en fonction d'un signal dit de contrôle de gain,
dispositif caractérisé en ce qu'il comporte en outre :
. un premier et un deuxième modules de décalage, chacun étant muni d'une entrée et d'une sortie de signal, entre lesquelles il est destiné à générer une différence de potentiel dont la valeur dépend de la valeur d'un signal de commande, les premier et deuxième modules de décalage étant respectivement disposés entre le module d'acquisition et l'amplificateur, d'une part, et à la suite de l'amplificateur, d'autre part, et
. un premier et un deuxième comparateurs, destinés à délivrer, lorsque le signal d'entrée du dispositif présente un niveau dit de référence, les signaux de commande des premier et deuxième modules de décalage, respectivement représentatifs d'une différence existant entre la valeur du signal de sortie du premier module de décalage et une première valeur prédéterminée, d'une part, et d'une différence entre la valeur du signal de sortie de l'amplificateur et une deuxième valeur prédéterminée, d'autre part.

2. Dispositif d'acquisition et d'amplification selon la revendication 1, caractérisé en ce qu'il comporte :
. N branches d'acquisition comprenant chacune un module d'acquisition et un module de décalage, les N modules d'acquisition étant destinés à recevoir et à mémoriser alternativement le signal d'entrée du dispositif, et
. un multiplexeur muni d'une sortie et de N entrées, chacune reliée à la sortie du module de décalage de l'une des N branches d'acquisition, l'amplificateur étant destiné à amplifier le signal de sortie du multiplexeur, le premier comparateur étant destiné à délivrer à celui des modules de décalage dont la sortie est sélectionnée par le multiplexeur un signal de commande représentatif d'une différence existant entre la valeur du signal de sortie du multiplexeur et la première valeur prédéterminée lorsque le signal d'entrée du dispositif présente un niveau de référence.

3. Dispositif d'acquisition et d'amplification selon la revendication 2, caractérisé en ce qu'il comporte un deuxième amplificateur, dont le gain est fixe, et qui est inséré entre le multiplexeur et le premier comparateur et destiné à amplifier le signal de sortie du multiplexeur.

4. Dispositif d'acquisition et d'amplification selon la revendication 3, caractérisé en ce que la valeur du gain du deuxième amplificateur est égale à la valeur maximale que peut prendre le gain de l'amplificateur à gain variable.

5. Caméra contenant :
. un dispositif de détection et de conversion de lumière en signaux électroniques analogiques,
. un dispositif d'acquisition et d'amplification desdits signaux, présentant une entrée destinée à recevoir un signal de contrôle de gain,
. un convertisseur analogique/numérique destiné à convertir des signaux analogiques délivrés par le dispositif d'acquisition et d'amplification en signaux numériques, et
. une unité de traitement numérique destinée à recevoir et à exploiter les signaux délivrés par le convertisseur analogique/numérique, et à émettre vers le dispositif d'acquisition et d'amplification le signal de contrôle de gain,
caractérisée en ce que le dispositif d'acquisition et d'amplification est conforme à la revendication 1.
